# EUROPÄISCHE PATENTSCHRIFT

(11) **EP 2 939 855 B1**
(45) Veröffentlichungstag und Bekanntmachung des Hinweises auf die Patenterteilung: **12.04.2017**
(21) Anmeldenummer: 15153529.1
(22) Anmeldetag: 03.02.2015
(51) Int. Cl.: B60C 19/08

(54) **Fahrzeugluftreifen aufweisend einen Streifen aus einer elektrisch leitfähigen Gummimischung**
Pneumatic vehicle tyre comprising a strip from an electrically conductive rubber mixture
Pneu de véhicule présentant une bande fabriquée en mélange de caoutchouc conducteur d'électricité

(30) Priorität: 30.04.2014 DE 102014208123; 15.09.2014 DE 102014218428
(43) Veröffentlichungstag der Anmeldung: 04.11.2015
(73) Patentinhaber: Continental Reifen Deutschland GmbH, 30165 Hannover (DE)
(72) Erfinder: Schramm, Joachim, 38112 Braunschweig (DE); Kleffmann, Jens, 30453 Hannover (DE); Guardalabene, Joe, 30163 Hannover (DE); Meyer, Jana, 31542 Bad Nenndorf (DE)
(74) Vertreter: Finger, Karsten

(56) Entgegenhaltungen:
- EP-A1- 1 844 958
- EP-A1- 1 997 653
- EP-A1- 2 500 188
- EP-A2- 1 738 935

## Beschreibung

Die Erfindung betrifft einen Fahrzeugluftreifen aufweisend einen Laufstreifen mit Kontaktfläche zur Fahrbahn, zwei Wulstbereiche jeweils mit einem Wulstkern, wobei ein erster Wulstbereich ein elektrisch leitfähiges Wulstteil aus einer elektrisch leitfähigen Gummimischung mit Kontaktfläche zur Felge aufweist, eine Karkasse, die durch Umschlingen der Wulstkerne verankert ist, zwei Seitenwände, die sich jeweils von einem Wulstbereich axial außenseitig entlang der Karkasse bis in den Laufstreifenbereich erstrecken und im Laufstreifenbereich axial außenseitig des Laufstreifens angeordnet sind und einen Streifen aus einer elektrisch leitfähigen Gummimischung, der das Wulstteil elektrisch leitfähig kontaktiert und sich zwischen Karkasse und Seitenwand bis in den Laufstreifenbereich erstreckt und im Laufstreifenbereich axial zwischen Laufstreifen und Seitenwand verläuft.

Fahrzeuge können sich während des Fahrbetriebes elektrisch aufladen. Um Entladungsvorgänge zu vermeiden, ist für eine ausreichende Ableitung der elektrostatischen Ladungen Sorge zu tragen. Um die elektrostatische Ladung ableiten zu können, sind Reifenbauteile elektrisch leitfähig gestaltet, so dass ein elektrisch leitfähiger Pfad von der Kontaktfläche des Fahrzeugluftreifens zur Fahrbahn bis zur Kontaktfläche des Fahrzeugluftreifens zur Reifenfelge vorliegt. Dies kann beispielsweise durch die Verwendung elektrisch leitfähiger Gummimischungen erfolgen.

Nun geht die Entwicklung dahin, den Rollwiderstand des Reifens zu reduzieren. Ein Ansatz, den Rollwiderstand zu reduzieren, ist der Einsatz rollwiderstandsarmer Gummimischungen. Die Hysterese dieser rollwiderstandsarmen Gummimischungen lässt sich vor allem durch den Einsatz niedrigaktiver Füllstoffe, geringerer Mengen an Füllstoff oder durch den Austausch von Ruß durch Silika verringern. Der Einsatz dieser rollwiderstandsarmen Gummimischungen führt jedoch zu einer Erhöhung des elektrischen Widerstandes dieser Gummimischungen, so dass die elektrische Leitfähigkeit sinkt. Der geforderte elektrische Widerstand des Gesamtreifens von höchstens 1x10⁸ Ω zur Ableitung der elektrostatischen Ladung kann nicht sichergestellt werden.

Oftmals werden zur Abhilfe sogenannte leitfähige Ruße in geringsten Konzentrationen verwendet. Diese haben allerdings eine verstärkende/versteifende Wirkung und wirken sich auch negativ auf das Hystereseverhalten und somit negativ auf den Rollwiderstand aus. Zudem ist eine solche Maßnahme basierend auf leitfähigen Rußen teuer. Die Entwicklung geht somit dahin, den Einsatz an elektrisch leitfähiger Gummimischung im Fahrzeugluftreifen zu reduzieren.

Aus der DE 60 2005 004 481 T2 ist ein Fahrzeugluftreifen bekannt, bei dem die Gummimischungen des Laufstreifens, der Scheitelbewehrung mit Verstärkungslagen und eines Wulstteils des Wulstbereichs elektrisch leitfähig gebildet sind. Offenbart ist auch ein elektrisch leitfähiges Band, welches das Wulstteil und die Schulterbewehrung elektrisch leitfähig verbindet, wobei das Band radial innerhalb der Scheitelbewehrung angeordnet ist und diese an ihrer radial inneren Oberfläche kontaktiert. Ein solcher Fahrzeugluftreifen weist eine Vielzahl von Bauteilen auf, deren Gummimischungen elektrisch leitfähig gebildet ist, was sich negativ auf den Rollwiderstand auswirkt.

Aus der EP 2 500 188 A1 ist ein Fahrzeugluftreifen bekannt, dessen Laufstreifen aus einer nicht ausreichend elektrisch leitfähigen Gummimischungen gebildet ist. Weiter weist der Fahrzeugluftreifen ein Wulstteil des Wulstbereichs aus einer elektrisch leitfähigen Gummimischungen auf. Das Wulstteil kontaktiert ein elektrisch leitfähiges Band, welches sich vom Wulstbereich zwischen Karkasse und Seitenwand bis zum Bereich des Laufstreifens erstreckt, wo es axial zwischen Laufstreifen und Seitenwand im Schulterbereich an der Reifenoberfläche endet. Somit ist die Reifenoberfläche und das Wulstteil über das Band elektrisch leitfähig miteinander verbunden. Der elektrisch leitfähige Bereich der Reifenoberfläche ist allerdings durch die geringe Ausdehnung des Bandes auf der Reifenoberfläche sehr begrenzt. Zudem ergibt sich das Problem, dass durch fortwährenden Abrieb, insbesondere bei einem ausgeprägten Abrieb der Reifenschulter bzw. der Schulterkante, der Kontakt des Bandes zur Fahrbahnoberfläche nicht über die gesamte Nutzungsdauer des Reifens gewährleistet ist. Somit ist die elektrische Leitfähigkeit des Reifens nicht über seine gesamte Nutzungsdauer zuverlässig sichergestellt. Diese Entgegenhaltung gilt als nächstliegender Stand der Technik. Die Entwicklung geht dahin, die elektrische Leitfähigkeit des Fahrzeugluftreifens zuverlässig sicherzustellen.
Es ist Aufgabe der Erfindung, auf einfache Art und Weise einen Fahrzeugluftreifen zur Verfügung zu stellen, dessen elektrische Leitfähigkeit über die gesamte Nutzungsdauer des Fahrzeugluftreifens bei gleichzeitig gutem Rollwiderstand zuverlässiger gewährleistet ist.
Die Aufgabe wird gelöst, indem die Gummimischung des Laufstreifens elektrisch leitfähig ausgebildet ist und indem der Streifen den Laufstreifen elektrisch leitfähig kontaktiert, wodurch der Streifen das Wulstteil und den Laufstreifen elektrisch leitfähig miteinander verbindet.
Untersuchungen haben gezeigt, dass bei einer solchen Konstruktion der elektrisch leitfähige Kontakt zwischen Streifen und Laufstreifen auch bei ausgeprägtem Abrieb, insbesondere der Reifenschulter bzw. der Schulterkante, über die gesamte Nutzungsdauer des Fahrzeugluftreifens gewährleistet ist. Weiter steht der Fahrzeugluftreifen über den elektrisch leitfähigen Laufstreifen mit der Fahrbahn und über das elektrisch leitfähige Wulstteil mit der Reifenfelge in Kontakt. Somit ist, auch bei ausgeprägtem vom Abrieb, ein zuverlässiger elektrisch leitfähiger Pfad von der Kontaktfläche des Wulstteils zur Felge über den Streifen bis zur Kontaktfläche des Laufstreifens zur Fahrbahnoberfläche gegeben.

Es ist zudem ein Fahrzeugluftreifen geschaffen, der bereits mit nur drei Bauteilen aus elektrisch leitfähiger Gummimischung die elektrische Leitfähigkeit des Fahrzeugluftreifens gewährleistet. Alle anderen Bauteile des Fahrzeugluftreifens können auf andere Eigenschaften, wie z.B. den Rollwiderstand, hin optimiert werden. Ein hoher Rußgehalt des Laufstreifens ist vorteilhaft für Abrieb und Schnittfestigkeit und verbessert somit die Haltbarkeit des Fahrzeugluftreifens.

Der elektrisch leitfähige Streifen verläuft im Laufstreifenbereich entlang des Seitenstreifens. Bei der Herstellung eines solchen Fahrzeugluftreifens ist somit keine bzw. nur eine minimale Anpassung der Produktionsschritte und / oder der Produktionsmaschinen erforderlich, wodurch ein einfacher Reifenbau ermöglicht ist.

Somit wird auf einfache Art und Weise ein Fahrzeugluftreifen zur Verfügung gestellt, dessen elektrische Leitfähigkeit über die gesamte Nutzungsdauer des Fahrzeugluftreifens bei gleichzeitig gutem Rollwiderstand zuverlässiger gewährleistet ist.

Eine Kontaktfläche zur Felge oder zur Fahrbahn ist dabei ein Teilbereich der Außenfläche des Fahrzeugluftreifens, der beim bestimmungsgemäßen Gebrauch des Fahrzeugluftreifens mit der Felge oder der Fahrbahn in Kontakt tritt.

Eine Gummimischung eines Reifenbestandteils wird als elektrisch leitfähig bezeichnet, wenn der Reifen, der dieses Reifenbestandteil aufweist, einen elektrischen Widerstand von höchstens 1x10⁸ Ω aufweist. Bevorzugt weist eine elektrisch leitfähige Gummimischung einen spezifischen elektrischen Widerstand kleiner 1x10⁸ Ω·cm, besonders bevorzugt kleiner 1x10⁶ Ω·cm, gemessen nach ISO 2878:2011, auf. Die elektrische Leitfähigkeit einer Gummimischung, welche beispielsweise auf Naturkautschuk, Isopren-Kautschuk, Butadien-Kautschuk oder Styrol-Butadien-Kautschuk oder einer Kombination daraus basiert, kann beispielsweise durch Rußmengen größer als 45 phr vom Rußtyp N 339 oder durch Zugabe von Graphit erreicht werden. Ein Material wird als nicht ausreichend elektrisch leitfähig bezeichnet, wenn sein spezifischer elektrischer Widerstand größer als 1x10⁸ Ω·cm ist.

Zwei Reifenbestandteile, die sich gegenseitig elektrisch leitfähig kontaktieren bzw. elektrisch leitfähig verbunden sind, sind beide ganz oder teilweise elektrisch leitfähig ausgebildet und über den Kontaktbereich ist ein elektrisch leitfähiger Pfad zwischen elektrisch leitfähigen Bereichen der Reifenbestandteile geschaffen, mittels dessen der elektrische Widerstand des Fahrzeugluftreifens von höchstens 1x10⁸ Ω gewährleistet ist.

Die elektrisch leitfähige Gummimischung des Laufstreifens stellt einen elektrisch leitfähigen Pfad von der Kontaktfläche des Fahrzeugluftreifens zur Fahrbahn bis zur Kontaktfläche des Laufstreifens mit dem Streifen her. In einer Ausführungsform weist die elektrisch leitfähige Gummimischung lokal unterschiedliche Zusammensetzung(en) auf.

In einer bevorzugten Ausführungsform beträgt die radiale Abmessung der elektrisch leitfähigen Kontaktfläche des Streifens mit dem Laufstreifen und / oder der elektrisch leitfähigen Kontaktfläche des Streifens mit dem Wulstteil mindestens 3 mm, bevorzugt mindestens 6 mm, besonders bevorzugt mindestens 10 mm. Eine solche Kontaktfläche gewährleistet auf zuverlässige Art und Weise den erforderlichen elektrisch leitfähigen Kontakt zwischen den elektrisch leitfähigen Reifenbestandteilen, wodurch die elektrische Leitfähigkeit des Fahrzeugluftreifens sichergestellt werden kann.

Zweckmäßig für eine zuverlässige elektrische Leitfähigkeit ist es, wenn der Streifen eine Dicke von 0,4 mm bis 1,4 mm, bevorzugt 0,7 mm bis 1 mm, aufweist. Zweckmäßig ist es dabei, wenn im Bereich der minimalen Wandstärke des Fahrzeugluftreifens die Dicke des Streifens geringer ist als die Dicke der Seitenwand.

In einer weiteren bevorzugten Ausführungsform erstreckt sich der Streifen zusammenhängend über den gesamten Umfang des Reifens. Durch eine solch symmetrische Anordnung werden optimale Rundlaufeigenschaften des Fahrzeugluftreifens erwirkt und der elektrisch leitfähige Pfad ist robust gegenüber lokal begrenzter geometrischer Unregelmäßigkeit oder Beschädigung des Streifens.

In einer weiteren bevorzugten Ausführungsform ist der Streifen in Umfangsrichtung ein- oder mehrmals unterbrochen. Durch die gezielte Belegung von Teilbereichen kann die eingesetzte Menge an elektrisch leitfähiger Kautschukmischung minimiert werden. Es kann sich dabei um einen in Umfangsrichtung begrenzten aber zusammenhängenden Streifen handeln. Dies ermöglicht einen einfachen Reifenbau und geringen Einsatz an elektrisch leitfähiger Gummimischung für den Streifen. Der Streifen kann aber auch in Umfangsrichtung in mehrere Teilstreifen unterteilt sein. Die Teilstreifen können, aber müssen nicht, zumindest teilweise berührend angeordnet sein. Jeder Teilstreifen kontaktiert das Wulstteil und den Laufstreifen. Der elektrisch leitfähige Pfad zeichnet sich durch seine Robustheit gegenüber lokal begrenzter Unregelmäßigkeiten auf. Eine symmetrische Verteilung der Teilstreifen zeichnet sich zudem durch gute Rundlaufeigenschaften aus. Zweckmäßig ist es, wenn ein Streifen bzw. Teilstreifen eine Breite von 40 mm aufweist.

Im Wulstbereich ist es vorteilhaft, wenn der Streifen das Wulstteil von axial außen kontaktiert. Dies ermöglicht einen einfachen Bauprozess, da der Streifen mit dem Wulstteil zusammen montiert werden kann.

Vorteilhaft ist es auch, wenn der Streifen das Wulstteil von axial innen kontaktiert. Der Streifen ist in diesem Bereich durch das Wulstteil vor Abrieb geschützt.

Vorteilhaft ist es weiter, wenn das Wulstteil das Hornprofil ganz oder teilweise umfasst, oder wenn das Wulstteil das Hornprofil und ein Wulstpolster ganz oder teilweise umfasst. Das Wulstteil ist dabei aus einer elektrisch leitfähigen Gummimischung. Bevorzugt umfasst das Wulstteil das gesamte Hornprofil bzw. das gesamte Hornprofil und Wulstpolster. Das Hornprofil weist eine Kontaktfläche zur Felge auf. Das Hornprofil bzw. das Hornprofil in Kombination mit dem Wulstpolster eignen sich hervorragend, um den elektrisch leitfähigen Kontakt zwischen Streifen und Kontaktfläche zur Felge herzustellen. Der Streifen kann das Hornprofil oder das Wulstpolster von axial innen oder axial außen kontaktieren. Der Streifen kann auch zwischen Hornprofil und Wulstposter angeordnet sein.

Im Laufstreifenbereich ist es von Vorteil, wenn das radial äußere Ende des Streifens innerhalb der Außenfläche des Fahrzeugluftreifens angeordnet ist. Der Streifen bildet also keinen Teil der Außenfläche des Fahrzeugluftreifens und steht somit nicht in direktem Kontakt zur Fahrbahn. Weist der Laufstreifen in radialer Richtung zumindest zwei unterschiedliche elektrisch leitfähige Gummimischungen auf, so kann es beispielsweise für die elektrische Leitfähigkeit ausreichend sein, wenn der Streifen die radial innerste Gummimischung elektrisch leitfähig kontaktiert.

Ein solcher Fahrzeugluftreifen weist zumindest entlang einer Seitenwand einen solchen Streifen auf. Vorteilhaft ist es auch, wenn auch der zweite Wulstbereich des Fahrzeugluftreifens ein Wulstteil aus einer elektrisch leitfähigen Gummimischung aufweist und wenn der Fahrzeugluftreifen einen zweiten Streifen aus einer elektrisch leitfähigen Gummimischung aufweist, welcher das Wulstteil des zweiten Wulstbereichs mit dem Laufstreifen elektrisch leitfähig verbindet. Die elektrische Leitfähigkeit eines solchen Fahrzeugluftreifens ist durch den zusätzlichen elektrisch leitfähigen Pfad noch zuverlässiger sichergestellt.

In einem weiteren bevorzugten Ausführungsbeispiel ist die Gummimischung der Seitenwand und / oder des Gürtelpakets und / oder der Karkasse nicht ausreichend elektrisch leitfähig ausgebildet. Sie kann auf den Rollwiderstand oder weitere vorteilhafte Eigenschaften wie Rissbeständigkeit hin optimiert werden. Die Gummimischungen können mit einem hohen Silikaanteil aufgebaut sein, wobei der Rußanteil beispielsweise kleiner als 15 phr ist. Insbesondere kann der spezifische elektrische Widerstand der Gummimischungen jeweils größer als 1x10⁸ Ω·cm, bevorzugt größer als 1x10⁹ Ω·cm, ausgebildet sein.

Bei dem Fahrzeugluftreifen handelt es sich vorzugsweise um einen Fahrzeugreifen für einen Personenkraftwagen oder um einen Nutzfahrzeugreifen. Besonders bevorzugt handelt es sich um einen Nutzfahrzeugreifen.

Weitere Merkmale, Vorteile und Einzelheiten der Erfindung werden nun anhand der Figuren, die schematische Ausführungsbeispiele darstellen, näher beschrieben. Dabei zeigt die:

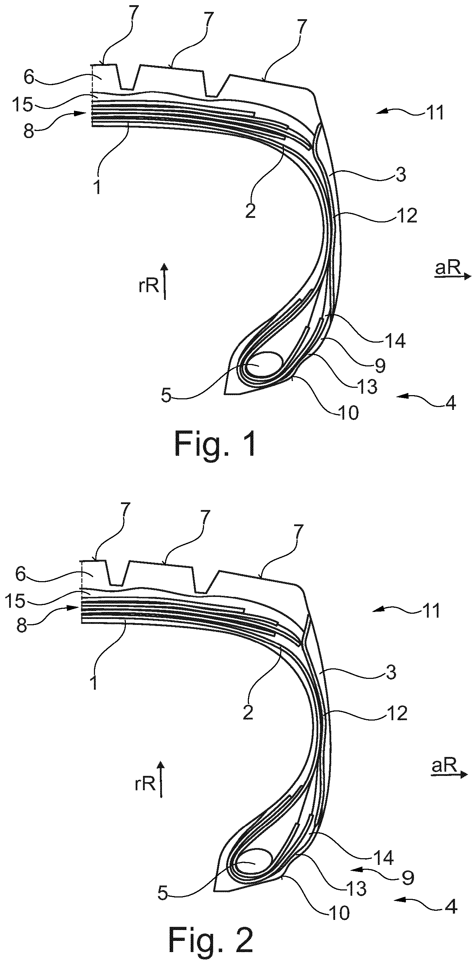

Fig. 1 bis Fig. 4 jeweils einen Teilradialschnitt durch einen erfindungsgemäßen Fahrzeugluftreifen.

Die Fig. 1 bis Fig. 4 zeigen jeweils die rechte Hälfte eines Querschnittes durch einen Fahrzeugluftreifen für einen Nutzfahrzeugwagen. Die wesentlichen Bauteile, aus welchen sich der dargestellte Fahrzeugluftreifen zusammensetzt, sind eine weitgehend luftundurchlässige Innenschicht 1, eine zumindest eine Festigkeitsträgerlage beinhaltende Karkasse 2, die in herkömmlicher Weise vom Zenitbereich des Fahrzeugluftreifens über die Seitenwände 3 bis in die Wulstbereiche 4 reicht und dort durch Umschlingen zugfester Wulstkerne 5 verankert ist, einen radial oberhalb der Karkasse 2 befindlichen profilierten Laufstreifen 6 mit Kontaktfläche 7 zur Fahrbahn und ein zwischen dem Laufstreifen 6 und der Karkasse 2 angeordnetes, Festigkeitsträgerlagen beinhaltendes Gürtelpaket 8.

Die Seitenwände 3 erstrecken sich jeweils von einem Wulstbereich 4 axial außenseitig entlang der Karkasse 2 bis in den Laufstreifenbereich 11 und sind im Laufstreifenbereich 11 axial außenseitig des Laufstreifens 6 angeordnet. Die Gummimischung des Laufstreifens 6 ist elektrisch leitfähig ausgebildet und besitzt einen spezifischen elektrischen Widerstand von maximal 1x10⁸ Ω·cm. Insbesondere ist die Kontaktfläche 7 zur Fahrbahn ganz oder teilweise aus dieser Gummimischung gebildet.

Der Wulstbereich 4 der gezeigten rechten Seite des Fahrzeugluftreifens weist ein Wulstteil 9 aus einer elektrisch leitfähigen Gummimischung mit Kontaktfläche 10 zur Felge auf. Weiter weist die gezeigte rechte Seite einen Streifen 12 aus einer elektrisch leitfähigen Gummimischung mit einem spezifischen elektrischen Widerstand von maximal 1x10⁸ Ω·cm auf. Der Streifen 12 kontaktiert das Wulstteil 9 elektrisch leitfähig und erstreckt sich zwischen Karkasse 2 und Seitenwand 3 bis in den Laufstreifenbereiche 11. Der Streifen 12 verläuft im Laufstreifenbereich 11 axial zwischen Laufstreifen 6 und Seitenwand 3 und kontaktiert den Laufstreifen 6 elektrisch leitfähig. Somit ist ein elektrisch leitfähiger Pfad von der Kontaktfläche 10 zur Felge bis zur Kontaktfläche 7 zur Fahrbahn über Wulstteil 9, Streifen 12 und Laufstreifen 6 gegeben. Das Wulstteil 9 umfasst das Hornprofil 13, welches aus einer elektrisch leitfähigen Gummimischung gebildet ist. Benachbart zum Hornprofil 13 ist das Wulstpolster 14 angeordnet.

Die Gummimischungen der Seitenwand 3, des Gürtelpakets 8 und der Karkasse 2 sind nicht ausreichend elektrisch leitfähig. Ihr spezifischer elektrischer Widerstand ist jeweils größer als 1x10⁸ Ω·cm.

In Fig. 1 ist das Wulstteil 9 durch das Hornprofil 13 gebildet. Der Streifen 12 kontaktiert das Hornprofil 13 von axial außen. Die radiale Abmessung der elektrisch leitfähigen Kontaktfläche des Streifens 12 mit dem Hornprofil 13 beträgt 4 mm, die radiale Abmessung der elektrisch leitfähigen Kontaktfläche des Streifens 12 mit dem Laufstreifen 6 beträgt 6 mm. Radial zwischen Laufstreifen 6 und Gürtelpaket 8 ist eine Laufstreifenunterplatte 15 angeordnet, welche aus einer nicht ausreichend elektrisch leitfähigen Gummimischung gebildet ist.

In Fig. 2 endet der Streifen 12 im Wulstbereich 4 zwischen Hornprofil 13 und Wulstpolster 14. In einer Ausführungsform ist das Wulstpolster 14 nicht ausreichend elektrisch leitfähig ausgebildet und der Streifen 12 kontaktiert nur das Hornprofil 13 elektrisch leitfähig. Das Wulstteil 9 ist somit durch das Hornprofil 13 gegeben. In einer anderen Ausführungsform ist auch das Wulstpolster 14 Teil des Wulstteils 9 und aus einer elektrisch leitfähigen Gummimischung. Beide Teile 13, 14 des Wulstteils 9 werden vom Streifen 12 elektrisch leitfähig kontaktiert, wodurch eine größere Kontaktfläche ermöglicht ist. Der Streifen 12 erstreckt sich zusammenhängend über den gesamten Umfang des Fahrzeugluftreifens mit einer Dicke von in etwa 1,0 mm. Radial zwischen Laufstreifen 6 und Gürtelpaket 8 ist eine Laufstreifenunterplatte 15 angeordnet, welche aus einer nicht ausreichend elektrisch leitfähigen Gummimischung gebildet ist.

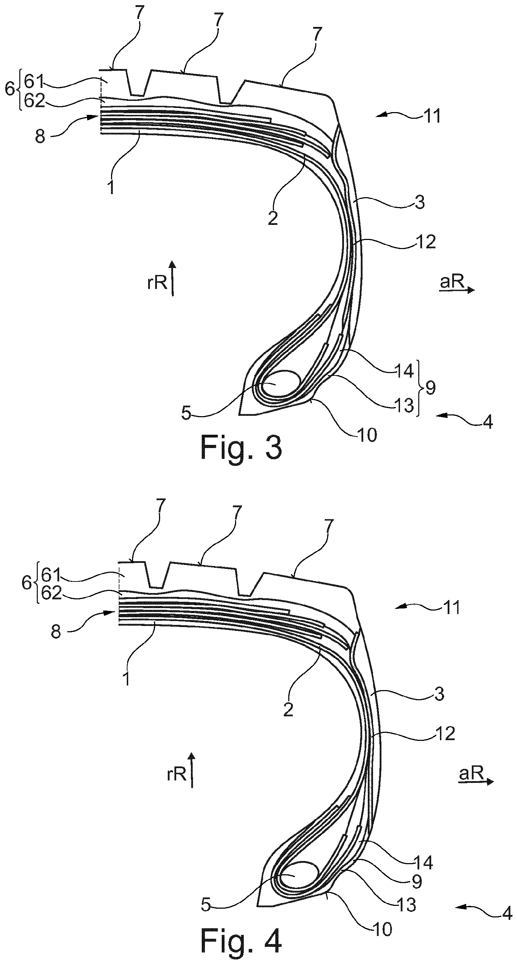

Fig. 3 zeigt eine weitere Ausführungsform, in welcher das Wulstteil 9 das Hornprofil 13 sowie das Wulstpolster 14 umfasst. Der Streifen 12 kontaktiert das Wulstteil 9 von axial innen elektrisch leitfähig. Der Streifen 12 kontaktiert dabei nur das Wulstpolster 14, nicht das Hornprofil 13. Der Streifen 12 ist in Umfangsrichtung einmal unterbrochen. Seine Erstreckung in Umfangsrichtung beträgt durchschnittlich 40 mm. Die radiale Abmessung der elektrisch leitfähigen Kontaktflächen des Streifens 12 zum Wulstteil 9 sowie zum Laufstreifen 6 betragen jeweils mindestens 10 mm. Der Streifen 12 weist eine Dicke von 0,9 mm auf. Der Laufstreifen 6 ist in radialer Richtung in einen radial äußeren Laufstreifen 61 und einen radial inneren Laufstreifen 62 zweigeteilt und weist somit eine lokal unterschiedliche Zusammensetzung der elektrisch leitfähigen Gummimischung auf. Auch der nicht dargestellte zweite Wulstbereich des Fahrzeugluftreifens weist ein elektrisch leitfähiges Wulstteil aus einer elektrisch leitfähigen Gummimischung auf. Weiter erstreckt sich von diesem zweiten elektrisch leitfähigen Wulstteil ein elektrisch leitfähiger Streifen zwischen Seitenstreifen und Karkasse bis in den Laufstreifenbereich und kontaktiert dort den Laufstreifen von axial außen elektrisch leitfähig. Somit weisen beide Seiten des Fahrzeugluftreifens einen elektrisch leitfähigen Pfad von der Kontaktfläche 7 des Fahrzeugluftreifens zur Straße bis zu den Kontaktflächen 10 des Fahrzeugluftreifens zur Felge auf.

In der Fig. 4 ist das Wulstteil 9 durch das Hornprofil 9 gegeben, welches von axial außen vom Streifen 12 elektrisch leitfähig kontaktiert wird. Der elektrisch leitfähige Laufstreifen 6 des Fahrzeugluftreifens erstreckt sich nach radial innen bis zum Gürtelpaket 8 des Fahrzeugluftreifens. Der Laufstreifen 6 ist in radialer Richtung in einen radial äußeren Laufstreifen 61 und einen radial inneren Laufstreifen 62 zweigeteilt und weist somit eine lokal unterschiedliche Zusammensetzung der elektrisch leitfähigen Gummimischung auf. Der Streifen 12 endet im Laufstreifenbereich 11 innerhalb der Außenfläche des Fahrzeugluftreifens. Das radial äußere Ende des Streifens 12 bildet somit keinen Teil der Außenfläche des Fahrzeugluftreifens und der Streifen 12 bildet keinen Teilbereich der Kontaktfläche 7 des Fahrzeugluftreifens mit der Fahrbahn. Der Streifen 12 kontaktiert den radial innen liegenden Bereich 62 des Laufstreifens 6 elektrisch leitfähig. Der Streifen 12 ist in Umfangsrichtung einmal unterbrochen und weist eine Abmessung von durchschnittlich 30 mm in Umfangsrichtung sowie eine Dicke von durchschnittlich 0,8 mm auf.

### Bezugszeichenliste

### (Teil der Beschreibung)

- 1: Innenschicht
- 2: Karkasse
- 3: Seitenwand
- 4: Wulstbereich
- 5: Wulstkern
- 6: Laufstreifen
- 61: radial äußerer Laufstreifen
- 62: radial innerer Laufstreifen
- 7: Kontaktfläche zur Fahrbahn
- 8: Gürtelpaket
- 9: Wulstteil
- 10: Kontaktfläche zur Felge
- 11: Laufstreifenbereich
- 12: Streifen
- 13: Hornprofil
- 14: Wulstpolster
- 15: Laufstreifenunterplatte

- aR: axiale Richtung
- rR: radiale Richtung

## Patentansprüche

1. Fahrzeugluftreifen aufweisend einen Laufstreifen (6) mit Kontaktfläche (7) zur Fahrbahn, zwei Wulstbereiche (4) jeweils mit einem Wulstkern (5), wobei ein erster Wulstbereich (4) ein elektrisch leitfähiges Wulstteil (9) aus einer elektrisch leitfähigen Gummimischung mit Kontaktfläche (10) zur Felge aufweist, eine Karkasse (2), die durch Umschlingen der Wulstkerne (5) verankert ist, zwei Seitenwände (3), die sich jeweils von einem Wulstbereich (4) axial außenseitig entlang der Karkasse (2) bis in den Laufstreifenbereich (11) erstrecken und im Laufstreifenbereich (11) axial außenseitig des Laufstreifens (6) angeordnet sind und einen Streifen (12) aus einer elektrisch leitfähigen Gummimischung, der das Wulstteil (9) elektrisch leitfähig kontaktiert und sich zwischen Karkasse (2) und Seitenwand (3) bis in den Laufstreifenbereich (11) erstreckt und im Laufstreifenbereich (11) axial zwischen Laufstreifen (6) und Seitenwand (3) verläuft
**dadurch gekennzeichnet, dass**
die Gummimischung des Laufstreifens (6) elektrisch leitfähig ausgebildet ist und dass der Streifen (12) den Laufstreifen (6) elektrisch leitfähig kontaktiert, wodurch der Streifen (12) das Wulstteil (9) und den Laufstreifen (6) elektrisch leitfähig miteinander verbindet.

2. Fahrzeugluftreifen nach Anspruch 1, **dadurch gekennzeichnet, dass** die radiale Abmessung der elektrisch leitfähigen Kontaktfläche des Streifens (12) mit dem Laufstreifen (6) und / oder der elektrisch leitfähigen Kontaktfläche des Streifens (12) mit dem Wulstteil (9) mindestens 3 mm, bevorzugt mindestens 6 mm, besonders bevorzugt 8 mm bis 11 mm, beträgt.

3. Fahrzeugluftreifen nach Anspruch 1 oder 2, **dadurch gekennzeichnet, dass** sich der Streifen (12) zusammenhängend über den gesamten Umfang des Reifens erstreckt.

4. Fahrzeugluftreifen nach einem oder mehreren der Ansprüche 1 bis 3, **dadurch gekennzeichnet, dass** der Streifen (12) in Umfangsrichtung ein- oder mehrmals unterbrochen ist.

5. Fahrzeugluftreifen nach einem oder mehreren der Ansprüche 1 bis 4, **dadurch gekennzeichnet, dass** der Streifen (12) das Wulstteil (9) von axial außen kontaktiert.

6. Fahrzeugluftreifen nach einem oder mehreren der Ansprüche 1 bis 4, **dadurch gekennzeichnet, dass** der Streifen (12) das Wulstteil (9) von axial innen kontaktiert.

7. Fahrzeugluftreifen nach einem oder mehreren der Ansprüche 1 bis 6, **dadurch gekennzeichnet, dass** das Wulstteil (9) das Hornprofil (13) oder das Hornprofil (13) und ein Wulstpolster (14) umfasst.

8. Fahrzeugluftreifen nach einem oder mehreren der Ansprüche 1 bis 7, **dadurch gekennzeichnet, dass** das radial äußere Ende des Streifens (12) radial innerhalb der Außenfläche des Fahrzeugluftreifens angeordnet ist.

9. Fahrzeugluftreifen nach einem oder mehreren der Ansprüche 1 bis 8, **dadurch gekennzeichnet, dass** auch der zweite Wulstbereich (4) des Fahrzeugluftreifens ein Wulstteil (9) aus einer elektrisch leitfähigen Gummimischung aufweist und dass der Fahrzeugluftreifen einen zweiten Streifen (12) aus einer elektrisch leitfähigen Gummimischung aufweist, welcher das Wulstteil (9) des zweiten Wulstbereichs mit dem Laufstreifen (6) elektrisch leitfähig verbindet.

10. Fahrzeugluftreifen nach einem oder mehreren der Ansprüche 1 bis 9, **dadurch gekennzeichnet, dass** die Gummimischung der Seitenwand (3) und / oder des Gürtelpakets (8) und / oder der Karkasse (2) nicht ausreichend elektrisch leitfähig ausgebildet ist.

## Claims

1. Pneumatic vehicle tyre comprising a tread (6) with a contact area (7) with respect to the carriageway, two bead regions (4) each with a bead core (5), a first bead region (4) comprising an electrically conductive bead part (9) of an electrically conductive rubber mixture with a contact area (10) with respect to the rim, a carcass (2), which is anchored by wrapping around the bead cores (5), two sidewalls (3), which each extend from a bead region (4) axially on the outside along the carcass (2) into the tread region (11) and in the tread region (11) are arranged axially outside the tread (6), and a strip (12) of an electrically conductive rubber mixture, which contacts the bead part (9) electrically conductively and extends between the carcass (2) and the sidewall (3) into the tread region (11) and in the tread region (11) runs axially between the tread (6) and the sidewall (3),
**characterized in that**
the rubber mixture of the tread (6) is of an electrically conductive form and **in that** the strip (12) contacts the tread (6) electrically conductively, whereby the strip (12) connects the bead part (9) and the tread (6) electrically conductively to one another.

2. Pneumatic vehicle tyre according to Claim 1, **characterized in that** the radial dimension of the electrically conductive contact area of the strip (12) with the tread (6) and/or the electrically conductive contact area of the strip (12) with the bead part (9) is at least 3 mm, preferably at least 6 mm, particularly preferably 8 mm to 11 mm.

3. Pneumatic vehicle tyre according to Claim 1 or 2, **characterized in that** the strip (12) extends continuously over the entire circumference of the tyre.

4. Pneumatic vehicle tyre according to one or more of Claims 1 to 3, **characterized in that** the strip (12) is interrupted one or more times in the circumferential direction.

5. Pneumatic vehicle tyre according to one or more of Claims 1 to 4, **characterized in that** the strip (12) contacts the bead part (9) from axially outside.

6. Pneumatic vehicle tyre according to one or more of Claims 1 to 4, **characterized in that** the strip (12) contacts the bead part (9) from axially inside.

7. Pneumatic vehicle tyre according to one or more of Claims 1 to 6, **characterized in that** the bead part (9) comprises the flange profile (13) or the flange profile (13) and a bead pad (14).

8. Pneumatic vehicle tyre according to one or more of Claims 1 to 7, **characterized in that** the radially outer end of the strip (12) is arranged radially inside the outer surface of the pneumatic vehicle tyre.

9. Pneumatic vehicle tyre according to one or more of Claims 1 to 8, **characterized in that** the second bead region (4) of the pneumatic vehicle tyre also comprises a bead part (9) of an electrically conductive rubber mixture and **in that** the pneumatic vehicle tyre comprises a second strip (12) of an electrically conductive rubber mixture, which connects the bead part (9) of the second bead region electrically conductively to the tread (6).

10. Pneumatic vehicle tyre according to one or more of Claims 1 to 9, **characterized in that** the rubber mixture of the sidewall (3) and/or of the breaker belt assembly (8) and/or of the carcass (2) is of an insufficiently electrically conductive form.

## Revendications

1. Pneu de véhicule présentant une bande de roulement (6) avec une face de contact (7) avec la chaussée, deux régions de talon (4) respectivement avec une tringle de talon (5), dans lequel une première région de talon (4) présente une partie de talon électriquement conductrice (9) en un mélange de caoutchouc conducteur de l'électricité avec une face de contact (10) avec la jante, une carcasse (2), qui est ancrée par enroulement autour des tringles de talon (5), deux flancs (3), qui s'étendent respectivement d'une région de talon (4) axialement à l'extérieur le long de la carcasse (2) jusque dans la région de la bande de roulement (11) et qui sont disposés dans la région de la bande de roulement (11) axialement à l'extérieur de la bande de roulement (6), et une bande (12) en un mélange de caoutchouc conducteur de l'électricité, qui est en contact électriquement conducteur avec la partie de talon (9) et qui s'étend entre la carcasse (2) et le flanc (3) jusque dans la région de la bande de roulement (11), et qui dans la région de la bande de roulement (11) s'étend axialement entre la bande de roulement (6) et le flanc (3),
**caractérisé en ce que** le mélange de caoutchouc de la bande de roulement (6) est conducteur de l'électricité et **en ce que** la bande (12) est en contact électriquement conducteur avec la bande de roulement (6), la bande (12) reliant ainsi l'une à l'autre de façon électriquement conductrice la partie de talon (9) et la bande de roulement (6).

2. Pneu de véhicule selon la revendication 1, **caractérisé en ce que** la dimension radiale de la face de contact électriquement conductrice de la bande (12) avec la bande de roulement (6) et/ou de la face de contact électriquement conductrice de la bande (12) avec la partie de talon (9) vaut au moins 3 mm, de préférence au moins 6 mm, et de préférence encore de 8 mm à 11 mm.

3. Pneu de véhicule selon la revendication 1 ou 2, **caractérisé en ce que** la bande (12) s'étend de façon ininterrompue sur tout le pourtour du pneu.

4. Pneu de véhicule selon l'une quelconque des revendications 1 à 3, **caractérisé en ce que** la bande (12) est interrompue une ou plusieurs fois en direction périphérique.

5. Pneu de véhicule selon l'une quelconque des revendications 1 à 4, **caractérisé en ce que** la bande (12) contacte axialement par l'extérieur la partie de talon (9).

6. Pneu de véhicule selon l'une quelconque des revendications 1 à 4, **caractérisé en ce que** la bande (12) contacte axialement par l'intérieur la partie de talon (9).

7. Pneu de véhicule selon l'une quelconque des revendications 1 à 6, **caractérisé en ce que** la partie de talon (9) comprend le profil de rebord (13) ou le profil de rebord (13) et le coussin de jante (14).

8. Pneu de véhicule selon l'une quelconque des revendications 1 à 7, **caractérisé en ce que** l'extrémité radialement extérieure de la bande (12) est disposée radialement à l'intérieur de la face extérieure du pneu de véhicule.

9. Pneu de véhicule selon l'une quelconque des revendications 1 à 8, **caractérisé en ce que** la deuxième région de talon (4) du pneu de véhicule présente également une partie de talon (9) en un mélange de caoutchouc conducteur de l'électricité et **en ce que** le pneu de véhicule présente une deuxième bande (12) en un mélange de caoutchouc électriquement conducteur, qui relie de façon électriquement conductrice la partie de talon (9) de la deuxième région de talon à la bande de roulement (6).

10. Pneu de véhicule selon l'une quelconque des revendications 1 à 9, **caractérisé en ce que** le mélange de caoutchouc du flanc (3) et/ou de la nappe de ceinture (8) et/ou de la carcasse (2) n'est pas suffisamment conducteur de l'électricité.
